# EUROPEAN PATENT APPLICATION

(11) **EP 4 306 312 A1**
(43) Date of publication of application: **17.01.2024**
(21) Application number: 23183241.1
(22) Date of filing: 04.07.2023
(51) Int. Cl.: B32B 19/00, B32B 19/02, B32B 19/04, B32B 27/08, B32B 27/14, B32B 27/36

(54) **DUST PROTECTION FOR MACHINING AND HANDLING OF LAMELLAR ELEMENTS**

(30) Priority: 12.07.2022 ES 202230641
(71) Applicant: Comercial Edizar, S.A., 50172 Alfajarin (Zaragoza) (ES)
(72) Inventor: GARCIA GARCIA, JORGE, 50172 ALFAJARÍN (ZARAGOZA) (ES)
(74) Representative: Schäfer, Matthias W.

(57) **Abstract**

Dust protection for machining and handling of lamellar elements, suitable to be used with layered mica lamellae, characterised by the fact that it uses a multi-layer protective laminate that covers above and below the lamellar element of material susceptible to generate toxic particles during its machining or handling, with sheets of plastic material suitable to retain toxic particles, preferably a polyester adhesive tape with silicone adhesive.

The most important benefit of this invention is that it totally eliminates toxic dust particles, quartz in the case of mica, which are extremely dangerous for workers or users, resulting in a completely safe working environment, while minimising the need of expensive particle extraction and filtering devices at the workplace, with the consequent economic savings.

## Description

As in the title indicated, this description refers to a dust protection for machining and handling of lamellar elements, suitable to be used with layered mica lamellae, characterised by the fact that it comprises a multi-layer protective laminate that covers above and below the lamellar element of material susceptible to generate toxic particles during its machining or handling, with sheets of plastic material suitable to retain toxic particles, preferably a polyester adhesive tape with silicone adhesive.

### Field of the invention

The invention relates to the field of protective processes and equipment against toxic particles in the machining, handling and recycling of lamellar elements, especially layered mica lamellae, as well as equipment containing them.

### Current state of the art

There are nowadays many industrial processes in which airborne particles or dust are produced, which can affect the workers around. Dust here is understood as the dispersion of solid particles in the environment. When these particles are longer than wide, they are called fibres. Exposure to dust in the workplace is a problem that affects many different sectors (mining, foundry, quarrying, textile industry, baker's, agriculture, etc.).

Traditionally, pneumoconioses (dust exposure diseases) have been considered as occupational diseases.
Today they represent one fifth of all recognised occupational diseases. There are many other cases of respiratory diseases (asthma, chronic bronchitis, pulmonary emphysema) in which occupational exposure to dust plays an important role and yet they are considered as common diseases.

Depending on the type of particles, health effects can be more or less severe. However, there are no harmless dusts; any exposure to dust poses a risk. In general, dust causes respiratory tract irritation and, after repeated exposure, can lead to chronic bronchitis. Other types of dust cause specific diseases (asbestos, silica, lead). Some types of dust can also be explosive in confined environments (coal, rubber, aluminium). In order to know the type of dust, it is sometimes enough to know the composition of the material that causes it. But in other cases, it is necessary to use chemical analysis of air samples.

The smallest particles are the most dangerous: they stay in the air the longest and can penetrate deep into the bronchi. The greatest risk is therefore in the invisible dust. It is usually the reason why not the total atmospheric dust is measured, but only the so-called "breathable dust". The "breathable dust" is the fraction of dust that can penetrate into the lungs alveoli.

| **Particle size** | **Lung penetration capacity** |
|---|---|
| > 50 microns | Cannot be inhaled |
| 10-50 microns | Retention in nose and throat |
| < 5 microns | Penetrate into the pulmonary alveolus |

| | |
|---|---|
| 1 micron = 0.001 mm. | |

Some problems can be identified without measuring them: visible dust clouds, dust escaping from machines or installations, dust accumulation on floors or walls, incorrect operation of extractors, etc. However, the way to know exactly how much dust is present is to weigh the dust collected in an air sample by means of appropriate filters. The respirable fraction is separated, and its mass (in mg/m³) is measured by a method called gravimetry. Sampling can be done by means of personal air samplers (the person carries the device with him/ her) or by means of stationary sampling (fixed device at a point).

The harmful effects of dust include, at the respiratory level:
- Pneumoconiosis: silicosis, asbestosis, coal miners' pneumoconiosis, siderosis, aluminosis, berylliosis, etc.
- Lung cancer: dust containing arsenic, chromates, nickel, asbestos, radioactive particles, etc.
- Nasal cancer: wood dust in furniture manufacturing and leather dust in shoe industries.
- Respiratory irritation: tracheitis, bronchitis, pneumonitis, emphysema and pulmonary oedema.
- Allergy: occupational asthma and extrinsic allergic alveolitis (plant dusts and certain metals).
- Byssinosis: lung disease due to cotton, flax or hemp dusts.
- Respiratory infection: dusts containing fungi, viruses or bacteria.

Generally, it is considered that no person should be exposed to dust (a collection of water-insoluble particles that do not contain asbestos and whose crystalline silica concentration is less than 1 %) at concentrations of more than 10 mg/m³ of total dust (total dust = a collection of particles that are inhaled from the whole collection of suspended matter present in the air) or 3 mg/m³ of respirable fraction (respirable fraction = part of the total dust that reaches the pulmonary alveoli), for 8 hours of work, regardless of the relevant work regulations, which may restrict it even further.

As an illustrative example of the importance of dust, the exposure limits currently set by the Spanish National Institute for Occupational Safety and Health are as follows:

| **Product** | **Exposure limits** |
|---|---|
| Cotton | 1,5 mg/m³ |
| Asbestos (*) - Crocidolite | 0.0 fibres/cc |
| Asbestos (*) - Chrysotile | 0.2 fibres/cc |
| Asbestos (*) - Other var. | 0.1 fibres/cc |
| Coal | 2,0 mg/m³ (resp. fract.) |
| Portland cement | 10,0 mg/m³ (total dust) |
| Cereals | 4,0 mg/m³ (total dust) |
| Mineral fibres | 1.0 fibres/cc |
| Natural graphite | 2 mg/m³ (resp. tract.) |
| Wood (dust) | 5,0 mg/m³ (total dust) |
| Mica | 3.0 mg/m³ (resp. tract.) |
| Crystalline silica (*) - Cristobalite | 0.05 g/m³ (resp. tract.) |
| Crystalline silica (*) - Quartz | 0.1 mg/m³ (resp. tract.) |
| Talc | 2.0 mg/m³ (resp. tract.) |

Those marked as (*), because they are suspected carcinogens, do not actually have a safe limit.

Only concentrations that are as low as possible are considered acceptable. Some wood dusts are also suspected of causing cancer. In these cases, it is advisable and safe to take protective measures in case of any dust concentration, no matter how low.

The protective measures that are usually applied to prevent the spread of dust consist mainly of placing mechanical means of general ventilation and suction devices in the work areas, as described for example in ES1077715 "Dust collector for drills and blowers", ES2063589 "Device for separating dust from air sucked in with dust in a workpiece machining machine", ES2330490 "Chip and/ or dust extraction system for a milling machine head provided with automatic clamping" and ES2365623 "Tool holder with suction system", coupled with dust dilution devices at source, such as water curtains as described in ES0228559 "Wet dust collection equipment", electrostatic systems as described in ES0335590 "A procedure for the protection of the walls and interior equipment of electrostatic dust separators" or similar measures. These installations have some disadvantages: they require a large economic investment for their installation, they are not completely effective in removing dust, and it is difficult to adapt them to changes in regulations that may arise in the maximum admissible limits.

Of course, it is advisable to combine all this with the appropriate personal protective equipment, or PPE, like protective suits, gloves, protective masks, breathing masks with the appropriate filters, etc., which is obviously uncomfortable and annoying for workers, limiting their movements and forcing them to take frequent breaks.

Laminating processes are also known, such as the one described in ES-2455980 "Procedure and device for laminating a substrate plate with a plastic sheet", but its application as a common practice is only for protection, not being directly applicable to avoid the emission of particles by the substrate, and no usefulness has ever been proven in this regard as it is not an expected or usual effect in these processes, especially when resistance to high temperatures is required.

From the above mentioned it is clear that dust emission during machining, stamping or operation is a major problem and that there is a lack of proven solutions on the market based on laminate.

### Description of the invention

In order to solve the problems that currently exist in the machining, punching and handling of many elements, especially layered mica lamellae, it has been developed a dust protection for machining and handling of lamellar elements object of this invention, which uses a multi-layer protective laminate to eliminate the emission of particles formed by
- at least one film adhered by means of an adhesive to one side of the lamellar element to be protected, and
- at least one other film adhered by means of an adhesive to the other side of the lamellar element to be protected,
where this lamellar element made of material susceptible to generate toxic particles during machining or handling, and the multil-ayer laminate made of plastic material suitable to retain the toxic particles, preferably a polyester adhesive tape with silicone adhesive.

The use of this dust protection for machining and handling of lamellar elements is preferably in mica lamellae for the production of windings, and more preferably for induction hobs for cookers.

This invention involves a characteristic process of application, comprising:
- a feeding step of the lamellar elements to be protected, in form of individual films, by means of an infeed conveyor belt,
- at least one step of continuous application of the films to the lamellar elements, preferably simultaneously on both sides of the lamellar element, by means of pressure and heat rollers, which press the films, with the incorporated adhesive, coming from feed reels,
- an extraction step of the lamellar elements, with the films already applied, by means of an outfeed conveyor belt, and
- a cutting step of the applied films, preferably by means of a guillotine in the gap between the films, to return them to the form of individual boards.

Optionally it may comprise an additional step of die-cutting the lamellar element, together with the films, to the appropriate shape, performed after the previous steps.

### Benefits of the invention

This dust protection for machining and handling of lamellar elements provides multiple benefits compared to the systems currently available, the most important of the is that it totally eliminates toxic dust particles, quartz in the case of mica, which are extremely dangerous for workers or users, resulting in a completely safe working environment.

Another of the most important benefits is that it eliminates, or minimises, the need of expensive particle extraction and filtering devices at the workplace, with the consequent economic savings.

It is also worth highlighting the elimination or reduction in personal protective equipment (PPE), such as masks, filters, gloves and suits, for the working staff, with the consequent comfort for the worker and improvement of their working conditions.

Another important benefit is that, as the material is laminated, it enables the subsequent recycling of the equipment containing it, once its service life has ended, without any risk.

Another benefit of this invention is that, by reducing the particles emitted to zero, it prevents the accumulation of particles in the lungs over a long period of time, even if the legal limits are not exceeded, thus minimising the possibility of occupational deseases.

Another added benefit is that it is a simple and inexpensive process, which can be done without a hughe investment in special equipment and machinery.

### Description of the drawings

For a better understanding of the purpose of the present invention, the annexed drawing shows a practical and preferred embodiment of a dust protection for machining and handling of lamellar elements.
Figure -1- shows a sectional view of the protection applied to the lamellar element.
Figure -2- shows a simplified diagram of an installation for carrying out the characteristic application procedure.

### Preferred embodiment of the invention

The constitution and characteristics of the invention can be better understood from the following description with reference to the attached figures.

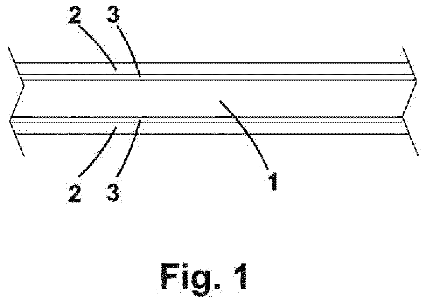

As can be seen in figure 1, it is illustrated how the dust protection for machining and handling of lamellar elements, suitable to be used with layered mica lamellae, comprises a multi-layer protective laminate consisting of
- at least one film (2) adhered by means of an adhesive (3) to one side of the lamellar element (1) to be protected, and
- at least one other film (2) adhered by means of an adhesive (3) to the other side of the lamellar element (1) to be protected,
where this lamellar element (1) is made of material susceptible to generate toxic particles during machining or handling, such as a layered mica lamella or an integrated mica paper plate, impregnated with high temperature silicone resin, polymerised under pressure and temperature to form rigid plates, the films (2) of plastic material suitable for the retention of toxic particles generated by the machining or handling of the lamellar elements (1), and the combined thickness of the films (2) and adhesives (3) being preferably less than the thickness of the lamellar element (1) to be protected.

The films (2) are preferably made of high temperature resistant polyester tape due to its excellent heat, abrasion and chemical resistance, while maintaining its flexibility.

The adhesive material (3) is preferably a silicone adhesive, which offers high heat resistance compared to other rubber and acrylic adhesives, reducing failures due to softening, bleeding and adhesive transfer. It is a pressure sensitive adhesive. In order to guarantee its function, the deepest possible contact between the two surfaces is required. It is also recommended to heat it as this increases the flow and the pressure causes it to penetrate into the irregularities of the backing material, making it adhere well to surfaces that are difficult to bond and it can be removed cleanly from many surfaces.

In the preferred embodiment of the invention the adhesive (3) is pre-applied on tape of the films (2), preferably in the form of a polyester adhesive tape with silicone adhesive.

The use of this dust protection for machining and handling of lamellar elements is for any material susceptible to generate toxic particles during machining or handling, such as cotton, asbestos, arsenic, coal, cement, cereals, mineral fibres, natural graphite, wood, mica, crystalline silica, talc, crocidolite, chrysotile, cristobalite or quartz, although it is preferably on mica lamellae for the production of windings, and more preferably for induction hobs for cookers.

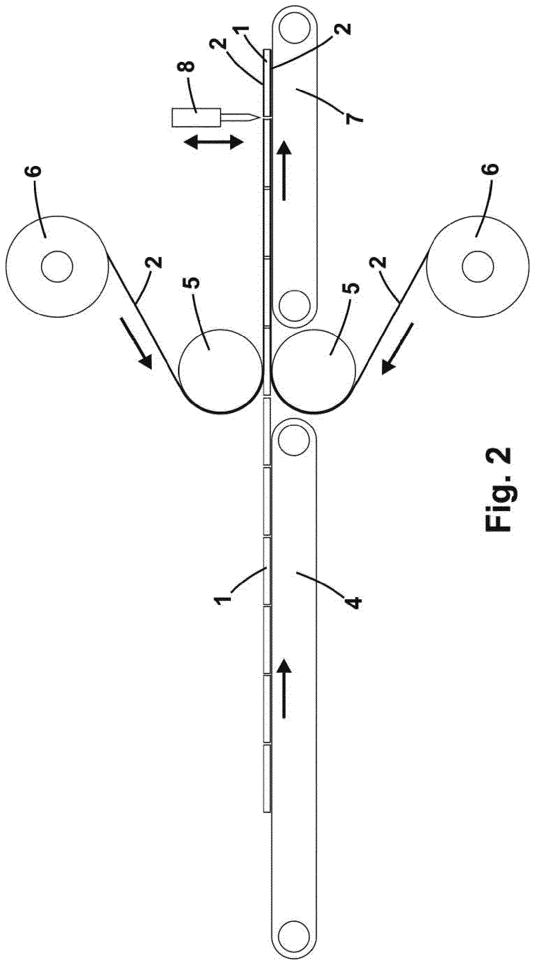

This invention involves a characteristic process of application comprising, as shown in figure 2,
- a feeding step of the lamellar elements (1) to be protected, in form of individual films, by means of an infeed conveyor belt (4),
- at least one step of continuous application of the films (2) to the lamellar elements (1),
- an extraction step of the lamellar elements (1), with the films (2) already applied, by means of an outfeed conveyor belt (7), and
- a cutting step of the applied films (2), preferably by means of a guillotine (8) in the gap between the films, to return them to the form of individual boards.

Optionally it may comprise an additional step of die-cutting the lamellar element (1), together with the films (2), to the appropriate shape, performed after the previous steps.

The step of continuous application of the films (2) to the lamellar elements (1) is preferably carried out simultaneously on both sides of the lamellar element (1), by means of pressure and heat rollers (5), which press the films (2), with the incorporated adhesive (3), coming from feed reels (6), being located at the top of the lamellar element (1), and another set of pressure and heat rollers (5) and its feed roll (6) at the bottom of the lamellar element (1).

The effectiveness of this protection has been experimentally tested using, as an example, layered mica lamellae, carrying out particle measurements before and after applying the protection, checking the presence before and the absence afterwards of toxic particles during handling.

For these example tests, the following commercial materials have been used as examples only:
- as lamellar element (1) has been used ISOMIK 9.16, consisting of integrated mica paper plates, impregnated with high temperature silicone resins, polymerised under pressure and temperature to form rigid plates, which is a material especially used as a base for resistors, insulation plates, etc., in all types of electrical heating equipment, in particular where, by their nature, fumes from the binder are undesirable (toasters, hair dryers, heaters, ovens, microwave ovens, etc.). It can also be used in electrical switchgear, spark chambers and, generally, in all applications where high thermal and dielectric performance is required. Its main properties include resistance to temperatures up to 500 °C, easy die-cutting even in small parts, high resistance to electrical winding of conductive filaments and excellent dielectric characteristics,
- 3M-8991 polyester tape has been used as protection films. This material is a blue polyester tape with a silicone adhesive, usable in a wide variety of high temperature applications, including powder paint masking, flashback arrestors, and bag sealing applications. Other applications include joining, tabs fitting or sealing rolls of silicone-treated materials or coatings.

Its main properties include excellent resistance to heat, abrasion and chemicals, while maintaining its flexibility.

The tests were carried out using the services of approved industrial hygiene testing laboratories, for the measurement of toxic dust particles emitted, using BMB-0286, BMB-0287 and BMB-0288 pumps, with an average flow rate of 2.20 l/min, during between 4.5 and 5 hours.

The maximum values for the exposure index (i) to particles, according to current legislation, were taken as those indicated in table 1.

**- Table 1 -**

| **Pollutant** | **Limit value (i)** | **Type L.V.** |
|---|---|---|
| Particles (insoluble or poorly soluble) Respirable Fraction | 3.0000 | PDE (Permitted Daily Exposure) |
| Crystalline silica (Quartz) | 0.0500 | PDE (Permitted Daily Exposure) |

The results shown in table 2 were obtained. Two tests were carried out with the standard lamellar element, one in a normal process and the other in a controlled process, with dust protective measures, and another test with the lamellar element protected by the polyester films.

**- Table 2 -**

| **Sample** | **Pollutant** | **P.M. (mg/m³)** | **D.E. (mg/m³)** | **(i)** |
|---|---|---|---|---|
| Lamellar element - Normal process | Particles (insoluble or poorly soluble) Respirable Fraction | 0.3306 | 0.3306 | 0.11 |
| | Crystalline silica (Quartz) | 0.0050 | 0.0050 | 0.1 |
| Lamellar element - Controlled process | Particles (insoluble or poorly soluble) Respirable Fraction | 0.3321 | 0.2076 | 0.07 |
| | Crystalline silica (Quartz) | 0.0050 | 0.0031 | **0.06** |
| Lamellar element + protective films | Particles (insoluble or poorly soluble) Respirable Fraction | 0.3033 | 0.1896 | 0.06 |
| | Crystalline silica (Quartz) | **0** | **0** | **0** |

In this table:
*(i)* - *Exposure index.*
*P.M.: Particles Measurement*
*D.E.: Direct Emission, indicating that everything analysed comes from the same source.*

It is verified that in all the tests the exposure index for particles (insoluble or slightly soluble) - Respirable Fraction remains below the limit value (<3.0000), while the exposure index for crystalline silica dust (quartz), in the case of the standard lamellar element, without protection, is above the safety limits set by the occupational risk regulations (>0.0500), while in the lamellar element with layered protection the index obtained is 0, with no toxic particles of quartz being detected, thereby eliminating the risk for its handling by the staff.

The skilled person in the art will easily understand that you can combine features of different embodiments with features of other possible embodiments, provided that such a combination is technically possible.

All information referring to examples or embodiments is part of the description of the invention.

## Claims

1. - The dust protection for machining and handling of lamellar elements, suitable to be used with layered mica lamellae, **characterised by the fact that** it comprises a multi-layer protective laminate comprising:
- at least one film (2) adhered by means of an adhesive (3) to one side of the lamellar element (1) to be protected, and
- at least one other film (2) adhered by means of an adhesive (3) to the other side of the lamellar element (1) to be protected,
where this lamellar element (1) made of material susceptible to generate toxic particles during machining or handling, and the films (2) are made of plastic material suitable to retain the toxic particles generated during the machining or handling operations of the lamellar elements (1).

2. - Dust protection for machining and handling of lamellar elements, according to the previous claim, **characterised by the fact that** the combined thickness of the films (2) and adhesives (3) is less than the thickness of the lamellar element (1) to be protected.

3. - Dust protection for machining and handling of lamellar elements, according to any of the previous claims, **characterised by the fact that** the films (2) are made of polyester resistant to high temperatures.

4. - Dust protection for machining and handling of lamellar elements, according to any of the previous claims, **characterised by the fact that** the adhesive (3) is a silicone adhesive material.

5. - Dust protection for machining and handling of lamellar elements, according to any of the previous claims, **characterised by the fact that** the adhesive (3) is pre-applied on the films (2)

6. - Use of a dust protection for machining and handling of lamellar elements, according to any of the previous claims, **characterised by the fact that** the lamellar element (1) to be protected are layered mica lamellae.

7. - Use of a dust protection for machining and handling of lamellar elements, according to the claim number 6, **characterised by the fact that** the lamellar element (1) to be protected is an integrated mica paper plate, impregnated with high temperature silicone resin, polymerised under pressure and temperature to form rigid plates.

8. - Use of a dust protection for machining and handling of lamellar elements, according to any of the previous claims 6 and 7, **characterised by the fact that** the lamellar element (1) to be protected are layered mica lamellae for the production of windings.

9. - Use of a dust protection for machining and handling of lamellar elements, according to any of the previous claims 6, 7 and 8, **characterised by the fact that** the lamellar element (1) to be protected are layered mica lamellae for the production of windings for induction hobs for cookers.

10. - Application procedure of a dust protection for machining and handling of lamellar elements, according to any of the previous claims, **characterised by the fact that** it comprises
- a feeding step of the lamellar elements (1) to be protected, in form of individual films, by means of an infeed conveyor belt (4),
- at least one step of continuous application of the films (2) to the lamellar elements (1),
- an extraction step of the lamellar elements (1), with the films (2) already applied, by means of an outfeed conveyor belt (7), and
- a cutting step of the applied films (2), in the gap between the films, to return them to the form of individual boards.

11. - Application procedure of a dust protection for machining and handling of lamellar elements, according to the claim number 10, **characterised by the fact that** it comprises an additional step of die-cutting the lamellar element (1), together with the films (2), to the appropriate shape, performed after the previous steps.

12. - Application procedure of a dust protection for machining and handling of lamellar elements, according to any of the previous claims 10 and 11, **characterised by the fact that** the step of continuous application of the films (2) to the lamellar elements (1) is carried out simultaneously on both sides of the lamellar element (1), by means of pressure and heat rollers (5), which press the films (2), with the incorporated adhesive (3), coming from feed reels (6), being located at the top of the lamellar element (1), and another set of pressure and heat rollers (5) and its feed roll (6) at the bottom of the lamellar element (1).

13. - Application procedure of a dust protection for machining and handling of lamellar elements, according to any of the previous claims 10, 11 and 12, **characterised by the fact that** the cutting step of the applied films (2) is carried out by means of a guillotine (8).
